# FASCICULE DE BREVET EUROPEEN

(11) **EP 0 813 989 B1**
(45) Date de publication et mention de la délivrance du brevet: **06.03.2002**
(21) Numéro de dépôt: 97401338.5
(22) Date de dépôt: 13.06.1997
(51) Int. Cl.: B60K 37/06, G06K 11/06

(54) **Système tactile de commande des équipements électroniques embarqués dans un véhicule**
Berührungssteuerungssystem von elektronischen Fahrzeugeinrichtungen
Tactile control system of electronic vehicle equipment

(30) Priorité: 18.06.1996 FR 9607559
(43) Date de publication de la demande: 29.12.1997
(73) Titulaire: RENAULT, 92109 Boulogne-Billancourt (FR); FRANCE TELECOM SA, 75015 Paris (FR)
(72) Inventeur: Doignon, Philippe, 75011 Paris (FR); Kamp, Jean-François, 56890 Saint-Ave (FR)

(56) Documents cités:
- EP-A- 0 330 767
- DE-A- 4 443 912
- FR-A- 2 570 037
- PATENT ABSTRACTS OF JAPAN vol. 00, no. 00 & JP 08 095502 A (NEC CORP), 12 avril 1996,
- PATENT ABSTRACTS OF JAPAN vol. 018, no. 552 (P-1815), 20 octobre 1994 & JP 06 195519 A (MATSUSHITA ELECTRIC IND CO LTD), 15 juillet 1994,

## Description

L'invention concerne un système tactile pour la commande des équipements électroniques dans un véhicule, en particulier automobile, utilisant une surface tactile reliée à un dispositif de traitement électronique des informations selon une technique de reconnaissance de symboles et placée dans le véhicule de façon à conserver le contact des mains du conducteur sur le volant.
Les véhicules automobiles actuels sont dotés de systèmes électroniques de plus en plus nombreux offrant de plus en plus de prestations aux conducteurs comme un poste de radio, un lecteur de compacts-disques, un système de climatisation, un système d'aide à la navigation, un poste de téléphone, etc.... Ce nombre grandissant d'équipements, relativement complexes à commander, occasionne de nombreux déplacements de la main pour atteindre une commande bien précise, réduisant alors la sécurité de la conduite.
C'est pourquoi il est nécessaire de simplifier les commandes en réduisant le nombre de boutons à manipuler et en améliorant la cohérence entre ces commandes et leur accessibilité.
Par la publication EP-A-0 330 767 on connaît un dispositif de commande d'équipements acoustiques, tels qu'un lecteur de CD ou de cassettes audio, ou une radio de véhicule automobile. Ce dispositif comprend notamment une surface tactile dotée de diodes de type LED associés à des phototransistors, et des moyens de détection de la position d'un doigt posé sur la surface tactile, qui effectue des mouvements dont on veut connaître la durée. Avec ce dispositif, les coordonnées du point de départ et du point final du trajet effectué par le doigt, sont mémorisées, puis comparées aux coordonnées des tracés suivants, afin de détecter la direction du mouvement du doigt, tandis qu'un compteur mesure la durée de l'impact du doigt et sa vitesse de déplacement. Un autre système de commande d'équipements embarqués dans un véhicule automobile, illustré notamment par la publication DE 4443912, repose sur la sélection d'un menu partiel à partir d'un menu général, au moyen d'un écran comportant une surface d'affichage sensiblement verticale, sur laquelle sont affichés des symboles associés au menu partiel tandis qu'un panneau de commande est associé à l'écran et comporte des contacts de commutation, dont les positions correspondent aux symboles que l'on veut sélectionner. Enfin, chaque contact de commutation est placé sur un des segments rectangulaires composant le panneau de commande, qui est séparé de l'écran proprement dit.
Pour certains équipements, notamment l'aide à la navigation, la séquence d'appui sur les différents boutons est parfois longue et complexe, et nécessite un grand effort de mémorisation de la part du conducteur. Le parcours dans une liste, liste de noms de rues ou de communes par exemple, est également très long si la liste contient beaucoup d'éléments, car il n'y a pas actuellement la possibilité de se positionner directement, en une seule manoeuvre, sur l'élément désiré de la liste. De plus, l'introduction par le conducteur de données alphanumériques dans une liste, comme le nom d'un correspondant téléphonique par exemple, est souvent fastidieuse.
Certains de ces problèmes sont partiellement résolus par des solutions connues telles que celle décrite dans le brevet français publié sous le numéro FR-A-2 570 037 au nom de la Demanderesse, qui concerne un dispositif de commande audio-tactile à fonctions multiples, dans lequel un système de commande vocale et tactile est combiné à un système visuel de projection d'informations. Un écran tactile de sélection est superposé à un écran de visualisation. Grâce à ce dispositif, la cohérence des commandes est améliorée et leur utilisation simplifiée, mais le problème de l'accessibilité par le conducteur demeure car le déplacement du doigt vers l'écran tactile reste obligatoire.
La solution proposée par l'invention consiste à entrer une lettre ou un chiffre ou n'importe quel symbole prédéterminé, directement dans le système, sans défilement systématique de tout l'alphabet ou de tous les chiffres d'une liste.
Pour cela, l'objet de l'invention est un système tactile pour la commande des équipements électroniques embarqués dans un véhicule, comprenant un écran de visualisation et une surface tactile sur laquelle le conducteur trace des caractères en déplaçant son doigt, reliée à un dispositif de traitement électronique selon une technique de reconnaissance de symboles, comprenant :
- un premier circuit d'interface avec la surface tactile qui fournit continûment les coordonnées de la position variable du doigt dans un repère déterminé de la surface tactile.
- une unité de traitement à microprocesseur desdites coordonnées de la position du doigt, pour l'analyse et la reconnaissance de symboles répertoriés tracés par les variations de la position du doigt, qui activent les différents équipements,
- un deuxième circuit d'interface multiplexée assurant la communication entre l'unité de traitement' et les commandes des différents équipements et,
- un écran de visualisation relié à l'unité de traitement qui affiche la commande activée.
Conformément à l'invention,
- la surface tactile est positionnée dans un véhicule de façon à maintenir le contact des mains du conducteur sur le volant, et
- le dispositif de traitement électronique comprend en plus un dictionnaire relié à l'unité de traitement comportant un répertoire de symboles reconnus par celle-ci.
Un autre objet de l'invention est un procédé de commande des équipements électroniques embarqués dans un véhicule utilisant le système tactile selon la caractéristique précédente, et comportant les étapes suivantes :
- le tracé d'un symbole sur la surface tactile, par le doigt du conducteur du véhicule;
- l'établissement des coordonnées du symbole tracé, par le premier circuit d'interface.
- l'analyse et la comparaison, par l'unité de traitement, des coordonnées du symbole tracé avec celles de symboles mémorisés dans le dictionnaire ;
- la reconnaissance du symbole tracé ;
- la mise en communication, par le deuxième circuit d'interface multiplexée, de l'unité de traitement avec un des équipements auquel elle envoie une commande ;
- l'information du conducteur de la commande prise en compte par l'équipement, par affichage sur l'écran, ce procédé étant caractérisé en ce que ladite information au conducteur de la commande prise en compte par l'équipement est également réalisée sous forme sonore.

L'invention résout ainsi les problèmes d'accessibilité aux commandes, de mémorisation et de cohérence des commandes dont le nombre est réduit. Par diminution du nombre de câbles reliant les équipements à leurs dispositifs de commande, on améliore la fiabilité du système. L'invention permet également un accès direct aux différentes prestations offertes par le véhicule au conducteur, ainsi qu'un accès rapide à un élément d'une liste.

Différents modes de réalisation de l'invention selon les revendications 1 et 7 sont précisés dans les revendications 2 à 6 et 8 et 9 dépendantes.

D'autres caractéristiques et avantages de l'invention apparaîtront à la lecture de la description d'un exemple de réalisation, illustrée par les figures suivantes :
- la figure 1 est une vue du poste de conduite d'un véhicule automobile équipé du système de commande selon l'invention;
- la figure 2 est un schéma fonctionnel d'un système de commande selon l'invention ;
- la figure 3 est un tableau récapitulatif de quelques exemples de symboles et les commandes correspondantes.

La caractéristique essentielle du système de commande des équipements électroniques d'un véhicule, notamment automobile, consiste en l'association d'une surface tactile sur laquelle le conducteur trace un symbole par pression du doigt, avec un dispositif de traitement électronique des informations, délivrées par cette surface tactile, par une technique de reconnaissance de symboles.

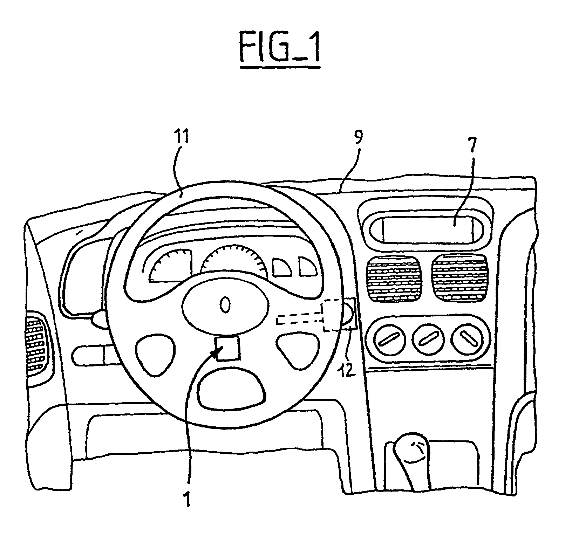

La surface tactile extra-plate est positionnée de façon à maintenir le contact des mains du conducteur sur le volant pour ne pas diminuer la sécurité de conduite. A cet effet, comme le montre la planche de bord d'un véhicule sur la figure 1, elle est avantageusement montée sur le volant 11, ou supportée par la gaine qui entoure la colonne de direction, réalisant une commande 12 dite haute colonne, comme un satellite sous volant. La position variable du doigt du conducteur lors du tracé d'un symbole est détectée par le dispositif de traitement dans lequel est implémentée une technique de reconnaissance de symboles à partir d'une séquence de coordonnées, selon les axes de la surface, qui traduisent la suite de points réalisant le tracé du symbole par la pression du doigt.

Ce système de commande unique permet d'activer tous les équipements électriques embarqués dans le véhicule et nécessitant une interface avec le conducteur.

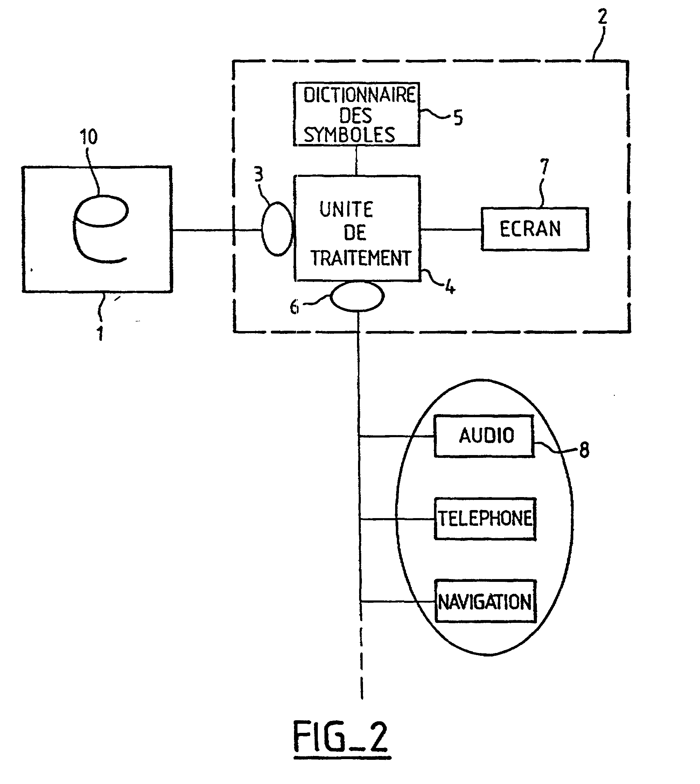

Selon la figure 2 qui est le schéma fonctionnel d'un exemple de réalisation du système de commande selon l'invention, celui-ci comprend une surface tactile 1 extra-plate, de forme carrée de 6 cm de côté par exemple, de type résistive ou constituée par des diodes électroluminescentes, sur laquelle on exerce une pression avec le doigt. Cette surface tactile 1 est reliée à un dispositif 2 de traitement électronique des signaux de sortie, délivrés par la surface sous l'effet de la pression d'un doigt lors du tracé d'un symbole et représentant la position ponctuelle du doigt. Ce dispositif 2 de traitement comprend tout d'abord un premier circuit d'interface 3 avec la surface tactile 1, dont le rôle est de fournir à tout instant les coordonnées (x, y) de la position du doigt sur la surface, dans un repère des axes de la surface.

Le dispositif 2 de traitement comprend une unité de traitement 4 à microprocesseur, destinée à traiter les coordonnées de la position du doigt envoyées par le circuit d'interface 3, qu'elle analyse et compare avec celles des symboles qui sont répertoriés dans un dictionnaire 5 associé. Un symbole est constitué par tout caractère, lettre de l'alphabet, chiffre, dessin ou pictogramme. Les symboles tracés sont analysés et reconnus par l'unité de traitement, individuellement, l'un après l'autre.

Le dictionnaire des symboles 5 peut être personnalisé au cours d'une phase d'apprentissage pendant laquelle le conducteur du véhicule apprend au dispositif de traitement électronique d'autres symboles que ceux répertoriés dans le dictionnaire et personnalisés, correspondant chacun à une ou plusieurs commandes d'un équipement. Par exemple, deux symboles particuliers peuvent être appris au dispositif pour augmenter et diminuer le volume du son, quelque soit le contexte dans lequel se trouve le véhicule.

Dès que le symbole tracé par le doigt est identifié par l'unité de traitement, cette dernière est mise en communication avec l'équipement à commander, par l'intermédiaire d'un second circuit 6 d'interface multiplexée qui reconnait l'équipement à activer.

L'équipement accomplit alors la commande de l'utilisateur et renvoie à celui-ci l'information de prise en compte de la commande de façon visuelle, sur un écran 7 par exemple, ou sonore, ou les deux à la fois. L'écran 7 de visualisation peut être placé dans la partie centrale de la planche de bord 9 du véhicule, accessible visuellement par le conducteur comme par le passager avant, comme cela apparaît sur la figure 1.

Dans le cas d'un dialogue à l'écran avec le conducteur, le résultat du tracé d'un symbole correspondant à une demande du conducteur peut prendre une des formes suivantes :
- affichage du menu de dialogue d'une prestation, tel que l'auto-radio, le téléphone, l'aide à la navigation ... ;
- exécution d'une commande de parcours dans un menu ou d'une commande de gestion d'une liste d'éléments ;
- affichage d'un élément d'une liste, de noms de communes ou de numéros de téléphone ;
- affichage d'une lettre ou d'un chiffre faisant partie de la composition d'un élément à insérer dans une liste ;
- exécution d'une série de commandes en réponse au tracé d'un symbole personnel du conducteur.

Dans un autre mode de réalisation particulier, la surface tactile 1 qui est transparente, peut être placée sur l'écran de visualisation.

L'invention concerne également un procédé de commande des équipements électroniques, embarqués dans un véhicule utilisant le dispositif décrit ci-dessus et consistant à :
a) tracer un symbole sur la surface tactile 1 avec le doigt du conducteur ;
b) établir les coordonnées du symbole tracé, dans un repère déterminé de la surface tactile 1, par le premier circuit d'interface 3 du dispositif électronique 2 de traitement ;
c) analyser et comparer les coordonnées du symbole tracé avec celles des symboles mémorisés dans le dictionnaire 5, par l'unité à microprocesseur 4 ;
d) reconnaître le symbole tracé et la commande correspondante par l'unité à microprocesseur 4 ;
e) mettre en communication, grâce au second circuit 6 d'interface multiplexée, l'unité de traitement 4 avec un des équipements auquel elle doit envoyer une commande ;
f) informer le conducteur de la prise en compte de la commande par l'équipement, par visualisation sur l'écran 7.

Selon l'invention, la reconnaissance d'un symbole tracé sur la surface tactile par le conducteur, présente plusieurs avantages. Elle permet d'accéder directement à une prestation offerte dans le véhicule, radio, navigation ..., indépendamment du contexte dans lequel se trouve le véhicule. Par exemple, le conducteur voulant téléphoner et se trouvant dans un sous-menu de la prestation "téléphone", peut passer, par le simple tracé d'un symbole, au menu de la prestation "aide à la navigation". Ainsi, si le nombre de symboles distincts n'est pas trop important, l'utilisateur n'a pas à mémoriser la séquence d'appuis successifs sur les différents boutons des équipements.

La reconnaissance d'un symbole permet aussi d'exécuter, selon le contexte dans lequel se trouvent les différents équipements du véhicule, des commandes de parcours dans les différents menus et sous-menus des équipements embarqués telles que "valider", "annuler", "retour au menu précédent", "retour à la racine des menus"..., ou bien encore des commandes de gestion de listes d'éléments, comme "effacer", "insérer"... . La conséquence directe est la diminution du nombre de boutons utilisés pour la commande des équipements et donc du nombre de fils de câblage, améliorant ainsi la fiabilité.

Plus particulièrement, la reconnaissance de lettres de l'alphabet et des chiffres permet tout d'abord d'accéder directement à une prestation, comme "A" ou "R" pour l'auto-radio, "T" pour le téléphone, "I" comme information trafic, "N" comme navigation..., comme cela a été dit précédemment, et éventuellement d'exécuter des commandes de parcours dans les menus. Elle permet également d'accéder plus rapidement à un élément d'une liste de noms et/ou de chiffres. En effet, il suffit alors d'entrer dans le dispositif de traitement les premières lettres du nom recherché, lettre par lettre et/ou chiffre par chiffre, pour se positionner immédiatement sur l'élément désiré de la liste. Le symbole mémorisé remplace alors plusieurs actions mécaniques différentes successives. Elle permet enfin d'entrer des données alphanumériques, permettant ainsi au conducteur d'ajouter un élément dans une liste, telle une liste de correspondants téléphoniques, beaucoup plus rapidement et directement qu'en parcourant un alphabet lettre par lettre.

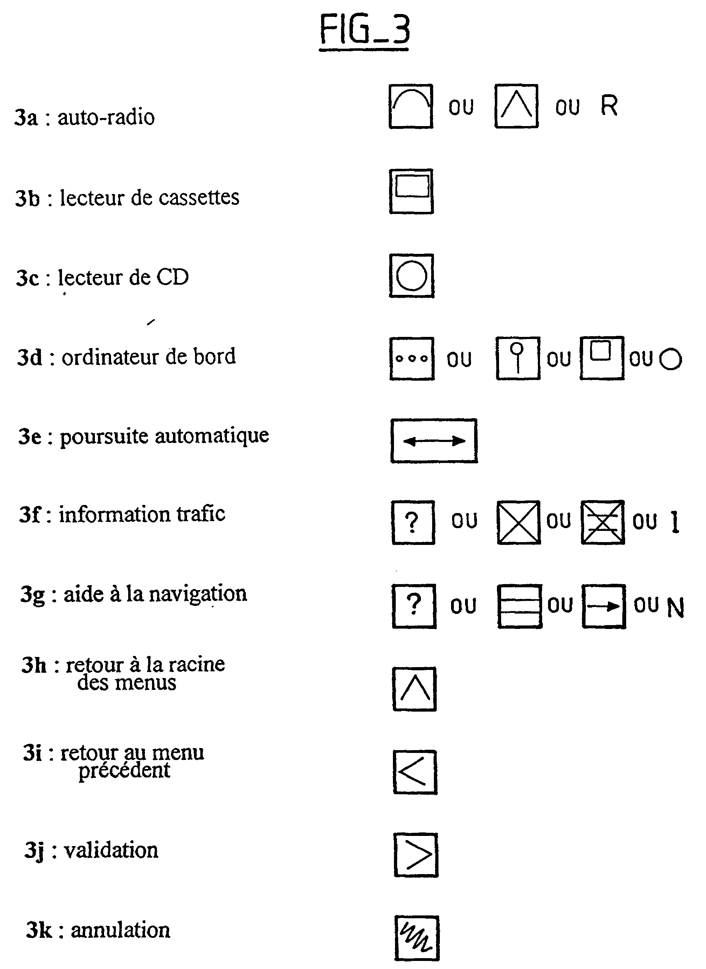

Dans le tableau de la figure 3, sont représentés quelques exemples de symboles à répertorier dans le dictionnaire 5 du dispositif selon l'invention. Les symboles 3ₐ à 3_{d} correspondent respectivement à la mise en route de l'auto-radio, du lecteur de cassettes audio, du lecteur de compacts-disques et de l'ordinateur de bord. Le symbole 3ₑ correspond à la commande du système de poursuite automatique du véhicule précédant avec un écart constant entre les deux véhicules. Les symboles 3_{f} et 3_{g} correspondent respectivement à une demande d'information trafic dans le système d'aide à la navigation, c'est-à-dire de localisation d'éventuels bouchons, et à une demande de guidage par un itinéraire. Les symboles 3ₕ et 3ᵢ correspondent à un retour respectivement à la racine des menus et au menu précédent. Quant aux symboles 3ⱼ et 3ₖ, ils correspondent à la validation et à l'annulation de la commande choisie par le conducteur.
Ce dispositif de commande selon l'invention étant indépendant du nombre d'équipements commandés, il est applicable à tout modèle d'une gamme de véhicules. De plus, il est adapté aussi bien à l'utilisateur débutant qu'à l'utilisateur habitué à s'en servir.

## Revendications

1. Système tactile pour la commande des équipements électroniques embarqués dans un véhicule, comprenant un écran de visualisation et une surface tactile sur laquelle le conducteur trace des caractères en déplaçant son doigt, reliée à un dispositif (2) de traitement électronique selon une technique de reconnaissance de symboles, comprenant :
- un premier circuit (3) d'interface avec la surface tactile (1) qui fournit continûment les coordonnées de la position variable du doigt dans un repère déterminé de la surface tactile (1),
- une unité de traitement (4) à microprocesseur desdites coordonnées de la position du doigt, pour l'analyse et la reconnaissance de symboles répertoriés (10) tracés par les variations de la position du doigt, qui activent les différents équipements (8),
- un deuxième circuit (6) d'interface multiplexée assurant la communication entre l'unité de traitement (4) et les commandes des différents équipements (8), et
- un écran (7) de visualisation relié à l'unité de traitement (4) qui affiche la commande activée,
**caractérisé en ce que :**
- la surface tactile (1) est positionnée dans un véhicule de façon à maintenir le contact des mains du conducteur sur le volant, et
- le dispositif (2) de traitement électronique comprend en plus un dictionnaire (5) relié à l'unité de traitement (4), comportant un répertoire de symboles reconnus par celle-ci.

2. Système tactile selon la revendication 1, **caractérisé en ce que** la surface tactile (1) est positionnée directement sur le volant (11).

3. Système tactile selon la revendication 1, **caractérisé en ce que** la surface tactile (1) est supportée par la gaine qui entoure la colonne de direction, réalisant une commande (12) dite haute colonne.

4. Système tactile selon l'une des revendications 1 à 3, **caractérisé en ce que** la surface tactile (1) est extra-plate, de type résistive ou constituée de diodes électroluminescentes.

5. Système tactile selon l'une des revendications 1 à 3, **caractérisé en ce que** la surface tactile (1) est transparente et placée sur l'écran de visualisation (7), disposé sur la partie centrale de la planche de bord (9) du véhicule.

6. Système tactile selon la revendication 1, **caractérisé en ce que** les symboles répertoriés dans le dictionnaire (5) sont de type alphanumériques, des lettres, des chiffres, des dessins ou des pictogrammes.

7. Procédé de commande des équipements électroniques embarqués dans un véhicule utilisant le système tactile selon les revendications précédentes comportant les étapes suivantes :
- le tracé d'un symbole (10) sur la surface tactile (1), par le doigt du conducteur du véhicule ;
- l'établissement des coordonnées du symbole tracé (10), par le premier circuit (3) d'interface ;
- l'analyse et la comparaison, par l'unité de traitement (4), des coordonnées du symbole tracé (10) avec celles de symboles mémorisés dans le dictionnaire (5);
- la reconnaissance du symbole tracé (10);
- la mise en communication, par le deuxième circuit (6) d'interface multiplexée, de l'unité de traitement (4) avec un des équipements (8) auquel elle envoie une commande;
- l'information du conducteur de la commande prise en compte par l'équipement (8), par affichage sur l'écran (7) ;
**caractérisé en ce que** ladite information au conducteur de la commande prise en compte par l'équipement (8) est également réalisée sous forme sonore.

8. 'Procédé de commande selon la revendication 7, **caractérisé en ce que**, dans le cas d'un dialogue à l'écran avec le conducteur lors de la prise en compte de la commande envoyée par un équipement (8), l'information du conducteur est présentée sous différentes formes possibles:
- un affichage du menu de dialogue d'une prestation, tel que l'auto-radio, le téléphone, l'aide à la navigation;
- une exécution d'une commande de parcours dans un menu ou d'une commande de gestion d'une liste d'éléments;
- un affichage d'un élément d'une liste, de noms de communes ou de numéros de téléphone;
- un affichage d'une lettre ou d'un chiffre faisant partie de la composition d'un élément à insérer dans une liste;
- une exécution d'une série de commandes en réponse au tracé d'un symbole personnel du conducteur.

9. Procédé de commande selon la revendication 8, **caractérisé en ce qu'**il comporte une étape d'apprentissage au cours de laquelle l'utilisateur apprend au dispositif de traitement électronique des symboles supplémentaires personnalisés, correspondant chacun à une ou plusieurs commandes d'un équipement (8) et qui sont mémorisés dans le dictionnaire (5).

## Claims

1. A touch system for the control of the on-board electronic equipment of a vehicle, comprising a display screen and a touch surface on which the driver draws characters by moving his finger, connected to an electronic processing device (2) using a symbol recognition technique, comprising:
- a first interface circuit (3) with the touch surface (1) which continually provides the coordinates of the varying position of the finger in a predetermined reference area of the touch surface (1);
- a microprocessor processing unit (4) for the coordinates of the finger position adapted to analyse and recognise stored symbols (10), drawn by variations of the finger, which actuate the various types of equipment (8);
- a second multiplex interface circuit (6) providing for communication between the processing unit (4) and the controls of the various equipment (8);
- a display screen (7) connected to the processing unit (4) which displays the control actuated,
**characterised in that**
- the touch surface (1) is positioned in the vehicle so as to enable the driver to keep his hands on the steering wheel;
- the electronic processing unit (2) further comprises a dictionary (5) connected to the processing unit (4) and comprising a list of symbols that it recognises.

2. A touch system as claimed in claim 1, **characterised in that** the touch surface (1) is positioned directly on the steering wheel (11).

3. A touch system as claimed in claim 1, **characterised in that** the touch surface (1) is supported by the sheath surrounding the steering column, forming a so-called high-column control (12).

4. A touch system as claimed in one of claims 1 to 3, **characterised in that** the touch surface (1) is super-flat, of the resistive type or formed by light-emitting diodes.

5. A touch surface as claimed in one of claims 1 to 3, **characterised in that** the touch surface (1) is transparent and placed on the display screen (7) disposed on the central portion of the vehicle dashboard (9).

6. A touch surface as claimed in claim 1, **characterised in that** the symbols stored in the dictionary (5) are of alphanumeric type, letters, numbers, drawings or pictograms.

7. A method of controlling the on-board electronic equipment of a vehicle using the touch system as claimed in the previous claims in which:
- the vehicle driver uses his finger to draw a symbol (10) on the touch surface (1);
- the first interface circuit (3) establishes the coordinates of the symbol drawn;
- the processing unit (4) analyses the coordinates of the symbol drawn (10) and compares them with those of symbols stored in the dictionary (5);
- the symbol drawn (10) is recognised;
- the second multiplex interface circuit (6) causes the processing unit (4) to communicate with one of the pieces of equipment (8) to which it supplies a command;
- the driver is informed that the command has been processed by the equipment (8), by display on the screen (7);
**characterised in that** the driver is also acoustically informed that the command has been processed by the equipment (8).

8. A control method as claimed in claim 7, **characterised in that** in the case of a screen dialogue with the driver during the acknowledgement of the command supplied by the equipment (8), the driver information is presented in various possible ways:
- display of a dialogue menu for a service, such as the car radio, telephone, navigation aid, etc.;
- performance of a menu command in a menu or of a component list management command;
- display of a component of a list, of names of municipalities or telephone numbers;
- display of a letter or a digit forming part of the composition of a component to be included in a list;
- performance of a sequence of commands in response to the drawing of a personalised symbol by the driver.

9. A control method as claimed in claim 8, **characterised in that** it comprises a learning stage during which the user teaches the electronic processing device supplementary personalised symbols, each corresponding to one or a plurality of controls of a piece of equipment (8), which are stored in the dictionary (5).

## Patentansprüche

1. Taktiles System zur Steuerung der an Bord eines Fahrzeugs befindlichen elektronischen Geräte, umfassend einen Anzeigebildschirm und eine taktile Fläche, auf die der Lenker Zeichen zeichnet, indem er seinen Finger bewegt, wobei diese Fläche mit einer Vorrichtung (2) zur elektronischen Verarbeitung gemäß einer Technik der Erkennung von Symbolen verbunden ist, umfassend:
- einen ersten Schaltkreis (3), der eine Schnittstelle mit der taktilen Fläche (1) bildet und kontinuierlich die Koordinaten der variablen Position des Fingers in einem von der taktilen Fläche (1) festgelegten Bezugssystem liefert;
- eine Einheit (4) mit Mikroprozessor zur Verarbeitung der genannten Koordinaten der Position des Fingers zur Analyse und Erkennung der verzeichneten, von den Veränderungen der Position des Fingers gebildeten Symbolen (10), die die verschiedenen Geräte (8) aktivieren;
- einen zweiten Multiplex-Schnittstellenschaltkreis (6), der für die Verbindung zwischen der Verarbeitungseinheit (4) und den Steuerungen der verschiedenen Geräte (8) sorgt; und
- einen Anzeigebildschirm (7), der mit der Verarbeitungseinheit (4) verbunden ist und den aktivierten Befehl anzeigt,
**dadurch gekennzeichnet, dass**
- die taktile Fläche (1) so in einem Fahrzeug angeordnet ist, dass der Kontakt der Hände des Lenkers mit dem Lenkrad aufrechterhalten wird; und
- die elektronische Verarbeitungsvorrichtung (2) darüber hinaus ein Wörterbuch (5) umfasst, das mit der Verarbeitungseinheit (4) verbunden ist und ein Verzeichnis der von dieser erkannten Symbole enthält.

2. Taktiles System nach Anspruch 1, **dadurch gekennzeichnet, dass** die taktile Fläche (1) direkt auf dem Lenkrad (11) angeordnet ist.

3. Taktiles System nach Anspruch 1, **dadurch gekennzeichnet, dass** die taktile Fläche (1) von der Hülle getragen wird, die die Lenksäule umgibt, wodurch eine sogenannte Steuerung (12) am oberen Teil der Säule gebildet wird.

4. Taktiles System nach einem der Ansprüche 1 bis 3, **dadurch gekennzeichnet, dass** die taktile Fläche (1) extraflach und vom Widerstandstyp oder aus Lumineszenzdioden gebildet ist.

5. Taktiles System nach einem der Ansprüche 1 bis 4, **dadurch gekennzeichnet, dass** die taktile Fläche (1) transparent und auf dem Anzeigebildschirm (7) angeordnet ist, der sich am mittleren Teil des Armaturenbretts (9) des Fahrzeugs befindet.

6. Taktiles System nach Anspruch 1, **dadurch gekennzeichnet, dass** die in dem Wörterbuch (5) verzeichneten Symbole alphanumerische Zeichen wie Buchstaben oder Ziffern bzw. Zeichnungen oder Piktogramme sind.

7. Verfahren zur Steuerung der an Bord eines Fahrzeugs befindlichen elektronischen Geräte, das das taktile System nach den vorhergehenden Ansprüchen verwendet und die folgenden Schritte umfasst:
- das Zeichnen eines Symbols (10) auf die taktile Fläche (1) durch den Finger des Lenkers des Fahrzeugs;
- die Erstellung der Koordinaten des gezeichneten Symbols (10) durch den ersten Schnittstellenschaltkreis (3);
- die Analyse und der Vergleich der Koordinaten des gezeichneten Symbols (10) mit jenen der in dem Wörterbuch gespeicherten Symbole (5) durch die Verarbeitungseinheit (4);
- die Erkennung des gezeichneten Symbols (10);
- die Herstellung einer Verbindung durch den zweiten Multiplex-Schaltkreis (6) zwischen der Verarbeitungseinheit (4) und einem der Geräte (8), an das sie einen Befehl sendet;
- die Information des Lenkers über die Kenntnisnahme des Befehls durch das Gerät (8) durch eine Anzeige am Bildschirm (7),
**dadurch gekennzeichnet, dass** die genannte Information des Lenkers über die Kenntnisnahme des Befehls durch das Gerät (8) auch in Form eines Tons erfolgt.

8. Steuerungsverfahren nach Anspruch 7, **dadurch gekennzeichnet, dass** im Fall eines Dialogs auf dem Bildschirm mit dem Lenker bei der Kenntnisnahme des gesendeten Befehls durch ein Gerät (8) die Information des Lenkers in verschiedenen möglichen Formen präsentiert wird:
- Anzeige des Dialogmenüs einer Leistung wie z.B. Autoradio, Telefon, Navigationshilfe usw.
- Ausführung eines Befehls zur Bewegung in einem Menü oder eines Befehls zur Verwaltung einer Liste von Elementen;
- Anzeige eines Elements einer Liste von Namen von Gemeinden oder Telefonnummern;
- Anzeige eines Buchstabens oder einer Ziffer, der bzw. die Teil eines zu einer Liste hinzuzufügenden Elements ist;
- Ausführung einer Reihe von Befehlen in Antwort auf das Zeichnen eines persönlichen Symbols des Lenkers.

9. Steuerungsverfahren nach Anspruch 8, **dadurch gekennzeichnet, dass** es eine Lernphase umfasst, in deren Lauf der Benutzer die elektronische Verarbeitungsvorrichtung zusätzliche, persönliche Symbole lehrt, die jeweils einem oder mehreren Befehlen für ein Gerät (8) entsprechen und im Wörterbuch (5) gespeichert werden.
